**Europäisches Patentamt**

**European Patent Office**

**Office européen des brevets**

(19)

(11) Veröffentlichungsnummer: **0 018 941**
**B1**

(12) # EUROPÄISCHE PATENTSCHRIFT

(45) Veröffentlichungstag der Patentschrift:
27.07.83

(51) Int. Cl.³: **H 04 Q 7/04**

(21) Anmeldenummer: **80810116.6**

(22) Anmeldetag: **02.04.80**

(54) **Anlage zur drahtlosen Übertragung von Telefongesprächen mit einer die Anzahl der Teilnehmerstationen unterschreitenden Anzahl von Funkkanälen.**

(30) Priorität: **07.05.79 CH 4241/79**

(43) Veröffentlichungstag der Anmeldung:
**12.11.80 Patentblatt 80/23**

(45) Bekanntmachung des Hinweises auf die Patenterteilung:
**27.07.83 Patentblatt 83/30**

(84) Benannte Vertragsstaaten:
**AT BE CH DE FR IT LI NL**

(56) Entgegenhaltungen:
**DE-B-1 155 491**
**DE-B-1 258 914**
**DE-C-956 776**
**GB-A-1 361 937**
**1978 INTERNATIONAL CONFERENCE ON COMMUNICATIONS, Band 3, 4-7 Juni 1978, Toronto, New York, US, BARRESI et al.: »The problem of radio telephone systems for rural subscribers. Systen RTR 102« Seiten 41.5.1 bis 41.5.5**
**1976 INTERNATIONAL CONFERENCE ON COMMUNICATIONS, Philadelphia, Band II, 14-16 Juni 1976, New York, US, HAGEN: »A VHF radio system for providing telephone subscriber service in difficult access rural areas«, Seiten 27-27 bis 27-32**

(73) Patentinhaber: **Autophon A.G., Ziegelmattstrasse 1-15, CH-4500 Solothurn 3 (CH)**

(72) Erfinder: **Hansen, Erik, Schürmatt, CH-4524 Günsberg (Solothurn) (CH)**
Erfinder: **Scheidegger, Hans, Brühlstrasse 131, CH-4500 (Solothurn) (CH)**

(74) Vertreter: **Bovard, Fritz Albert et al, Bovard & Cie. Patentanwälte VSP-Rechtsanwälte Optingenstrasse 16, CH-3000 Bern 25 (CH)**

**NEC RESERACH AND DEVELOPMENT, Nr. 53, April 1979, Tokyo, JP, MIYAWAKI et al.: »Radio subscriber system«, Seiten 36—45**
**A.T.E. JOURNAL, Band 22, 1966, Liverpool, GB, LOCKLEY: »A single-channel-radio-telephone link (type 700)« Seiten 16—21**

# Anlage zur drahtlosen Übertragung von Telefongesprächen mit einer die Anzahl der Teilnehmerstationen unterschreitenden Anzahl von Funkkanälen

Die vorliegende Erfindung betrifft eine Anlage zur drahtlosen Übertragung von Telefongesprächen und weist mehrere Teilnehmerstationen, je eine jeder der Teilnehmerstationen zugeordnete, an eine Telefonzentrale führende Anschlußleitung und eine Anzahl von Funkkanälen auf, wobei die Anzahl der Funkkanäle die Anzahl der Teilnehmerstationen unterschreitet und die Funkkanäle abwechslungsweise durch die verschiedenen Teilnehmerstationen benützt werden. Jede der Teilnehmerstationen und der Anschlußleitungen weist dabei eine Kennung auf. Die Anlage enthält ferner je einen jeder Teilnehmerstation zugeordneten, in der Folge als »teilnehmerseitig« bezeichneten, auf die verschiedenen Kanäle umschaltbaren Sender-Empfänger und je einen jedem Kanal zugeordneten und mit den verschiedenen Anschlußleitungen verbindbaren, in der Folge als »zentralenseitig« bezeichneten Sender-Empfänger. Die Anlage enthält weiter Schaltungsmittel, um die Kennung einer Anschlußleitung, auf welcher ein Anruf eintrifft, ferner die Kennung einer Teilnehmerstation, von welcher aus ein Verbindungsaufbau beabsichtigt ist und die von der Teilnehmerstation abgegebenen Wahlimpulse mit Hilfe von außerhalb des Sprachfrequenzbandes liegenden Signalfrequenzen zu übertragen. Die Anlage enthält weitere zentralenseitige Schaltungsmittel, um einen Kanal, über welchen ein an eine Teilnehmerstation gerichteter Anruf ausgesendet werden soll, zu kennzeichnen und ferner den einzelnen Teilnehmern zugeordnete Schaltungsmittel, welche im Ruhezustand der betreffenden Teilnehmerstation den zugehörigen Empfänger zyklisch auf den Empfang der verschiedenen Kanäle umschalten und beim Empfang eines gekennzeichneten Kanals die Umschaltung abbrechen.

Eine derartige Anlage ist beispielsweise aus dem Konferenzbericht »1978 International Conference on Communications, Band 3, Toronto, Canada June 4–7, 1978«, herausgegeben von IEEE USA, bekanntgeworden, und zwar aus dem Artikel von F. Barresi et. al.: »The problem of radio telephone systems for rural subscribers. System RTR 102« auf den Seiten 41.5.1 bis 41.5.5. In jenem System werden Signale für Kanalbelegung, Wahl, Schleifenschluß und Anruf mit Hilfe einer oberhalb des Sprachbereiches liegenden Frequenz übertragen, wobei dieses Signal zwecks Übermittlung der Wahl impulsmäßig in seiner Frequenz moduliert wird (FSK). Die Kennungen für die anzurufende Station und die anzuschaltende Amtsleitung und für die entsprechenden Quittungen werden mit im Sprachband liegenden Tonfrequenzen übertragen. Obwohl nähere Angaben über die Anzahl dieser Frequenzen fehlen, ist bei der angegebenen Maximalzahl von 60 Stationen pro Anlage anzunehmen, daß jeweils zwei Frequenzen gleichzeitig gesendet werden. Zur Auswertung und zur Erzeugung dieser Frequenzen sind demnach in jeder Teilnehmerstation zwei verhältnismäßig schmalbandige Filter notwendig. Die Empfänger derjenigen Teilnehmerstationen, welche nicht durch eine im Aufbau befindliche oder zustande gekommene Verbindung belegt sind, stellen ihre Empfangsfrequenz auf irgendeinen der freien Kanäle ein, und ein von der Zentrale ausgehender Anruf wird gleichzeitig auf allen diesen freien Kanälen ausgesendet.

Die Verwendung einer außerhalb des Sprachbandes liegenden Frequenz zu den vorher genannten Signalisierungszwecken bietet den Vorteil, daß diese Frequenz während der ganzen Dauer einer Verbindung dem Träger aufmoduliert ist und es der jeweiligen Empfangsstelle erlaubt, einen derart gekennzeichneten Träger von einem Störträger zu unterscheiden. Sofern diese Frequenz oberhalb des Sprachbandes gewählt wird, ergibt sich als weiterer Vorteil, daß die Impuls-Wahlsignale ohne besondere Schwierigkeiten und in allgemein bekannter Weise durch Frequenzverschiebung (FSK) übertragen werden können. Infolge der Signalgabe außerhalb des Sprachbandes wird die für die Sprachübertragung zur Verfügung stehende Modulationstiefe beschränkt, und das Sprachband wird beschnitten.

Aus der deutschen Patenschrift 956 776 ist es beispielsweise bekanntgeworden, Frequenzen unterhalb des Sprachbandes zu Signalzwecken zu verwenden. Gegenüber den Frequenzen oberhalb des Bandes ergibt sich dabei der Vorteil, daß das Sprachband am unteren Ende beschnitten wird, wodurch die Verständlichkeit in einem kleineren Maße beeinträchtigt wird als bei einer Beschneidung am oberen Ende. Außerdem ist diese Übertragungsart bei der Anwendung der üblichen Charakteristiken für die Modulation des Trägers auch in bezug auf die Beanspruchung von Modulationstiefe und von Bandbreite günstiger als eine oberhalb des Sprachbandes liegende Signalfrequenz. Dieser Vorteil fällt um so stärker ins Gewicht, je kleiner der verlangte Kanalabstand ist.

Diesen Vorteilen steht jedoch die Schwierigkeit gegenüber, mit einer Frequenz in der Größenordnung von 100 Hz ein Wahl-Impulssignal von 10 Impulsen pro s mit genügender Genauigkeit zu übertragen.

Die vorliegende Erfindung betrifft nun eine Anlage der eingangs beschriebenen Art, welche Schaltungsmittel enthält, um die Kennung einer Anschlußleitung, auf welcher ein Anruf eintrifft und die Kennung einer Teilnehmerstation, von welcher aus ein Verbindungsaufbau beabsichtigt ist, in gleicher Weise wie die von der Teilnehmerstation abgegebenen Wahlimpulse mit Hilfe von außerhalb des Sprachfrequenzbandes liegenden Signalfrequenzen zu übertragen. Die Anlage gemäß der vorliegenden Erfindung enthält außerdem zentralenseitige Schaltungsmittel, um einen Kanal, über welchen ein an eine Teilnehmerstation gerichteter Anruf ausgesendet werden soll, zu kennzeichnen und ferner den einzelnen Teilnehmern zugeordnete Schaltungsmittel, welche im Ruhezustand der betreffenden Teilnehmerstation den zugehörigen Empfänger zyklisch auf den Empfang der verschiedenen Kanäle umschalten und beim Empfang eines gekennzeichneten Kanals die Umschaltung abbrechen.

Mit der vorliegenden Erfindung werden nun die beschriebenen Aufgaben unter Verwendung einer neuen Kombination von an sich bekannten Merkmalen in einer von der bekannten Anlage abweichenden Art gelöst. Sie betrifft eine derartige Anlage, welche dadurch gekennzeichnet ist, daß als Signalfrequenz eine unterhalb des Sprachbandes liegende Frequenz verwendet ist und daß sowohl die Kennungen als auch die Wahlimpulse mit Hilfe von digitaler Phasenmodulation der Signalfrequenz übertragen werden, wobei diese Phasenmodulation Phasensprünge von 180° aufweist. Ein weiteres Kennzeichen dieser Anlage besteht darin, daß die genannte Kennzeichnung eines Anrufes mit einer einzigen, dem betreffenden Kanal aufmodulierten, im Sprachband liegenden und mehreren Teilnehmerstationen gemeinsam zugeordneten Steuerfrequenz erfolgt.

Es wird besonders darauf hingewiesen, daß in der Folge rein willkürlich die beiden Ausdrücke »Signalfrequenz« für die unterhalb des Sprachbandes liegende und »Steuerfrequenz« für die im Sprachband liegende, der Steuerung und Signalgabe dienende Frequenz verwendet sind.

In besonderen Ausführungsformen der Erfindung ist eine Steuerfrequenz außer in der Verkehrsrichtung von der Zentrale zum Teilnehmer auch in der Verkehrsrichtung vom Teilnehmer zur Zentrale verwendet. Die dann für die Übermittlung von Signalen in beiden Richtungen angewendeten Steuerfrequenzen werden sowohl bei einem von einer Teilnehmerstation ausgehenden Verbindungsaufbau als auch bei einem über eine Anschlußleitung eintreffenden Aufruf ausschließlich während einer diesbezüglichen Vorbereitungsphase übermittelt und lösen am Empfangsort bei deren Ausbleiben einen für den Verbindungsaufbau wesentlichen Schaltvorgang aus.

Die Vorteile der erfindungsgemäßen gegenüber der bekannten Anlage liegen außer der bereits erwähnten Verlegung der Signalfrequenz in einen unterhalb des Sprachbandes liegenden Bereich im Umstand, daß infolge der Übertragung der Kennungen mit den für die Übertragung der Wahlimpulse ohnehin notwendigen Einrichtungen bei den Einrichtungen zur Tonfrequenzübertragung Einsparungen gemacht werden können. Infolgedessen muß bei den teilnehmerseitigen Einrichtungen, im Gegensatz zur bekannten Anlage, nur eine einzige Tonfrequenz ausgewertet werden, wobei an die Bandbreite des Filters keine hohen Anforderungen gestellt werden müssen.

Die Erfindung wird nun anhand eines Ausführungsbeispieles beschrieben.

Die Fig. 1 zeigt ein Übersichtsschema einer Anlage mit vier Teilnehmern, welche über zwei Funkkanäle an vier Leitungen einer Zentrale angeschlossen werden können.

Die Fig. 2 zeigt ein Blockschema der einem einzelnen Teilnehmer zugeordneten, bei diesem Teilnehmer angeordneten Einrichtungen.

Die Fig. 3 zeigt ein Blockschema von an die Telefonzentrale angeschlossenen Einrichtungen, wobei ein Teil davon einem einzelnen Kanal und ein anderer Teil beiden Kanälen gemeinsam zugeordnet ist.

Die Fig. 4 zeigt das Blockschema einer Einrichtung zur Erkennung der Signalfrequenz und zur Demodulation der dieser Signalfrequenz mit Phasenmodulation aufmodulierten Impulse.

Die Fig. 5 zeigt den zeitlichen Ablauf von verschiedenen in der Einrichtung gemäß Fig. 4 auftretenden Signale, wobei die die verschiedenen Signale bezeichnenden Zahlen in der Fig. 4 an den Stellen, wo das betreffende Signal auftritt, ebenfalls eingetragen sind.

Die dargestellte Anlage umfaßt vier Telefonteilnehmer, von denen jedem eine an eine Telefonzentrale führende Anschlußleitung zugeteilt ist, wobei jeder Teilnehmer über einen von zwei Funkkanälen je mit der ihm zugeteilten Leitung verbindbar ist. Jeder Teilnehmer (und damit jede Leitung) weist eine einer bestimmten Anzahl von Impulsen entsprechende Kennung auf, welche in später erklärter Weise über die Funkkanäle übermittelt wird. Derartige Anlagen werden vorzugsweise mit bis zu vier Kanälen und 15 oder mehr Teilnehmern ausgeführt, und als Ausführungsbeispiel wurde ausschließlich der Einfachheit der Darstellung wegen eine Anlage mit derart wenig Teilnehmern und Funkkanälen gewählt.

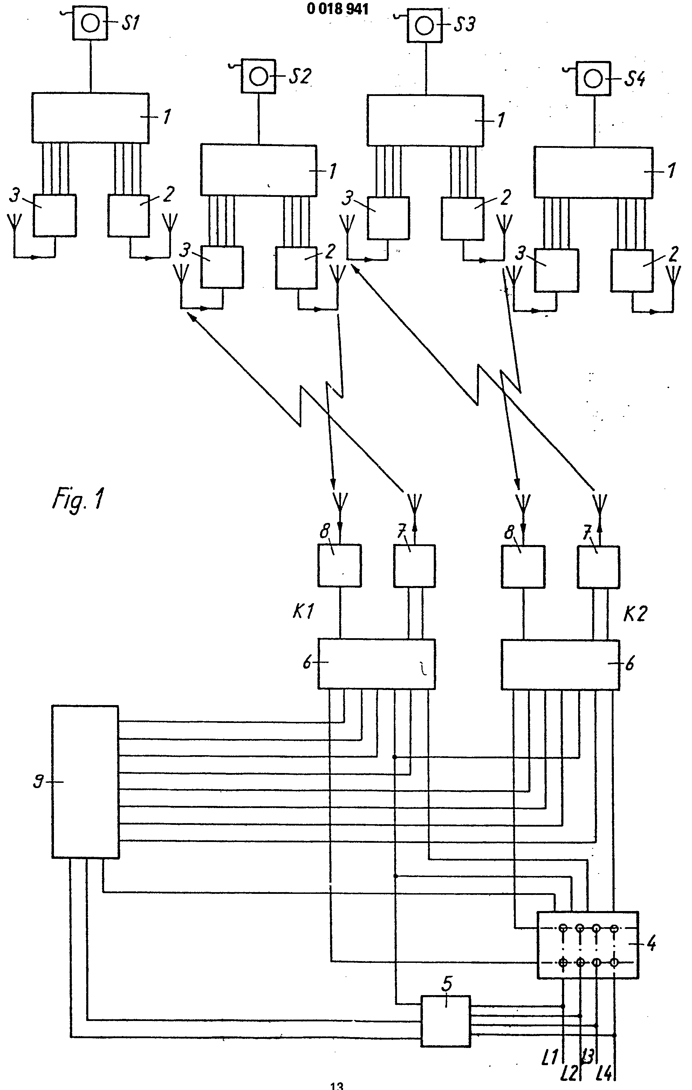

Aus der in Fig. 1 gesamthaft dargestellten Anlage sind die vier Telefon-Teilnehmerstationen S1 . . . S4 ersichtlich, von denen jede über eine zweiadrige Leitung mit einem dazugehörigen Teilnehmer-Steuergerät 1 verbunden ist. An jedes dieser Steuergeräte ist ein Sender 2 und ein Empfänger 3 angeschlossen, wobei Verbindungen für Einschaltung und Kanaleinstellung von Sender und Empfänger, eine Verbindung für die Modulation des Senders und je eine Verbindung für das Ausgangssignal des Empfängers und die Anzeige eines empfangenen Trägers vorhanden sind. Der Einfachheit halber sind je für Sender und Empfänger getrennte Antennen dargestellt; in Wirklichkeit werden die Antennen von Sendern und Empfängern in bekannter Weise über Weichen zusammengeschaltet.

Die den vier Teilnehmern zugeordneten, nach der nicht dargestellten Telefonzentrale führenden Leitungen sind mit L1 . . . L4 bezeichnet. Diese Leitungen sind einerseits an ein Koppelfeld 4 und anderseits an eine Anruf-Empfangsschaltung 5 angeschlossen. Jedem der beiden Kanäle K1 und K2 ist je ein Kanal-Steuergerät 6, ein Sender 7 und ein Empfänger 8 zugeordnet. Die Verbindungen zwischen Steuergerät und zugehörigem Sender dienen der Modulation und der Einschaltung (Tastung), die an den Empfänger führende Verbindung der Übertragung des Niederfrequenz-Ausgangssignals.

Die Anruf-Empfangsschaltung 5 weist für jede der Leitungen L1 . . . L4 einen auf ankommenden Rufstrom ansprechenden Stromkreis und einen Haltestromkreis auf, welcher vom ersten eintreffenden Ruf in den Arbeitszustand versetzt wird, während den Rufpausen in diesem Zustand verbleibt und erst beim Aufhören der periodischen Rufsignale mit einer bestimmten Verzögerung wiederum in den Ruhezustand zurückkehrt. Die Anruf-Empfangsschaltung 5 tastet im Bereitschaftszustand in nicht dargestellter Weise die verschiedenen Haltestromkreise zyklisch ab, stellt ankommende Anrufe fest und gibt ein die anrufende Leitung kennzeichnendes Signal ab.

Das Koppelfeld 4 besteht aus einer dem Produkt aus der Zahl von Teilnehmern und Kanälen entsprechenden Zahl von Relais, im vorliegenden Beispiel demnach 8, welche je eine der Leitungen L1 . . . L4 mit einem der Kanal-Steuergeräte verbinden können.

Das Haupt-Steuergerät 9 koordiniert die Schaltvorgänge der übrigen Geräte und weist daher Verbindungen von und nach den Kanal-Steuergeräten, der Anruf-Empfangsschaltung und dem Koppelfeld auf.

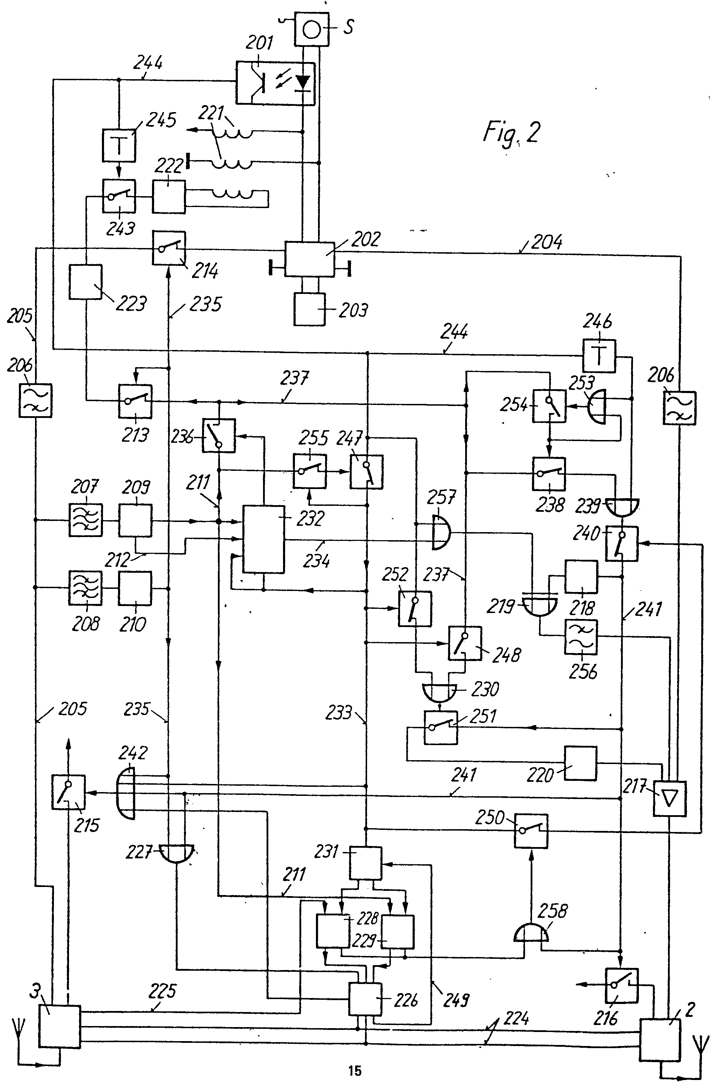

Die Fig. 2 zeigt eine Teilnehmerstation S, einen Sender 2 und einen Empfänger 3. Die dazwischen liegenden Einrichtungen gehören zu dem in Fig. 1 mit 1 bezeichneten Teilnehmer-Steuergerät. Verschiedene Baugruppen mit ziemlich komplizierten Arbeitsabläufen, die aber mit der Erfindung nicht in direktem Zusammenhang stehen und entweder allgemein bekannt sind oder anhand der Beschreibung ihrer Arbeitsweise durch den Fachmann ohne weiteres aufgebaut werden können, sind dabei nicht in allen Einzelheiten beschrieben.

Die Teilnehmerstation S ist über den Optokoppler 201 mit der Gabelschaltung 202 verbunden. An diese Gabelschaltung ist eine Nachbildung 203, eine nach dem Sender führende Sprechleitung 204 und eine vom Empfänger ankommende Sprechleitung 205 angeschlossen. Jede dieser Sprechleitungen verläuft über ein Hochpaßfilter 206, welches nur Frequenzen oberhalb 300 Hz durchläßt. Diese Filter bewirken, daß die mit unterhalb des Sprechbandes liegenden Frequenzen auf der drahtlosen Strecke erfolgende Signalgabe durch die Sprache nicht gestört wird bzw. daß die zur Signalgabe verwendeten Frequenzen die Sprache nicht stören. An die vom Empfänger eintreffende Leitung 205 sind außer der Gabel die beiden Bandpaßfilter 207 und 208 angeschlossen, wobei das Filter 207 auf eine unterhalb des Sprechbandes liegende, in der Folge als »Signalfrequenz« bezeichnete Frequenz von z. B. 150 Hz abgestimmt ist, während das Filter 208 auf eine im Sprachband liegende, in der Folge als »Steuerfrequenz« bezeichnete Frequenz von z. B. 1000 Hz abgestimmt ist.

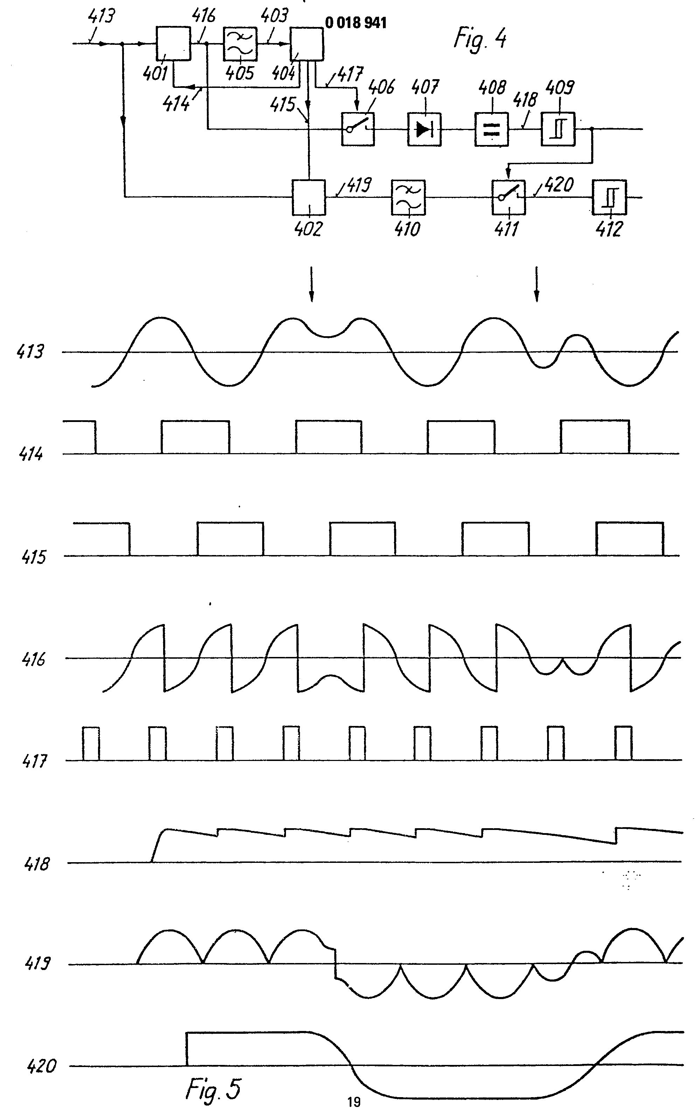

Die Signalfrequenz wird in einem Auswerter 209, welcher in Fig. 5 mit mehr Einzelheiten dargestellt und später beschrieben ist, in zwei Digitalsignale umgewandelt. Dabei zeigt das über die Verbindung 211 abgegebene Signal den Empfang der Signalfrequenz an, während das über die Verbindung 212 abgegebene durch Phasendrehungen der Signalfrequenz beeinflußt wird.

Der Auswerter 210 für die Steuerfrequenz gibt während des Empfangs dieser Frequenz über die Verbindung 235 ein digitales Signal ab, welches mit Hilfe der elektronischen Schalter 213 und 214 später beschriebene Verbindungen unterbricht.

Der Empfänger 3 kann über vier verschiedene, über das ODER-Tor 242 auf den elektronischen Schalter 215 einwirkende Verbindungen in Betrieb gesetzt werden. Über die Verbindung 225 zeigt er den Empfang eines Trägers an.

Der Generator 218 erzeugt, sofern er über die Verbindung 241 in Betrieb gesetzt wird, die Signalfrequenz als Rechtecksignal. Dieses Rechtecksignal durchläuft das EXKLUSIV-ODER-Tor 219 und das Tiefpaßfilter 256. Das Tor 219 bewirkt in Abhängigkeit von einem vom ODER-Tor 257 her eintreffenden Signal eine Inversion des vom Generator 218 erzeugten Signals und damit dessen Phasendrehung um 180°. Das Tiefpaßfilter 256 bewirkt die Umwandlung des Rechtecksignals in ein sinusförmiges Signal.

Der Sender 2 wird über den elektronischen Schalter 216 eingeschaltet (getastet). Die Modulation wird ihm von einem Summenverstärker 217 aus zugeführt. An die drei Eingänge dieses Summenverstärkers gelangt einerseits das über das Filter 206 ankommende Sprechsignal, die vorher beschriebene, vom Generator 218 erzeugte Signalfrequenz und die durch den Generator 220 erzeugte Steuerfrequenz.

Über die Verbindungen 224 wird an Sender und Empfänger von einer Kanalwahl-Einrichtung 226 aus der Kanal eingestellt, über welchen verkehrt werden soll. Diese Kanalwahl-Einrichtung schaltet im Bereitschaftszustand, d. h. solange von bzw. nach der Teilnehmerstation eine Verbindung weder hergestellt noch im Aufbau begriffen ist, ungefähr jede Sekunde kurzzeitig den Empfänger ein und läßt während der Einschaltzeit nacheinander die verschiedenen Kanäle wirksam werden. Durch diese Maßnahme wird an den meistens nicht an ein Versorgungsnetz angeschlossenen Teilnehmereinrichtungen Energie gespart. Der Kanalwechsel wird unterbrochen und der zuletzt angeschaltete Kanal beibehalten, solange über das ODER-Tor 227 ein Stop-Signal angelegt wird.

Bei einem Verbindungsaufbau Teilnehmer-Zentrale wird die Kanalwahl-Einrichtung 226 von einem der Suchstromkreise 228 oder 229, welche ihrerseits von der Suchumschaltung 231 wahlweise in den aktiven Zustand versetzt werden, gesteuert. Der Suchstromkreis 228 bewirkt die Suche nach einem Kanal, auf dem keine Trägerwelle empfangen wird, wobei das Vorhandensein eines Trägers vom Empfänger über die Verbindung 225 gemeldet wird. Der Suchstromkreis 229 bewirkt demgegenüber die Suche nach einem Kanal, auf welchen keine Signalfrequenz aufmoduliert ist. Das Vorhandensein der Signalfrequenz wird dabei über die Verbindung 211 gemeldet. Wegen der Berücksichtigung der längeren Einschwingzeit für die Signalfrequenz gegenüber derjenigen für die Trägerwelle muß die Suche der zweitgenannten Art langsamer ausgeführt werden als diejenige der erstgenannten Art.

Eine weitere besondere Einrichtung des Teilnehmer-Steuergerätes ist der Wähl- und Prüfstromkreis 232, welchem Kriterien für den Empfang der Signalfrequenz (über Verbindung 211), für den Empfang von Impulsen (über Verbindung 212) und für eine vom Teilnehmer ausgehende Verkehrsaufnahme (über Verbindung 233) zugeführt werden. Sofern ihm das letztgenannte Kriterium zugeführt wird, gibt er über die Verbindung 234 eine die eigene Teilnehmerstation kennzeichnende Zahl von Impulsen (Kennung) ab und zählt anschließend die über die Verbindung 212 eintreffenden, als Quittungsimpulse dienenden Impulse. Sofern die Summe der abgegebenen und der empfangenen Impulse eine bestimmte, die Anzahl der vorhandenen Teilnehmer übersteigende Zahl ergibt, versetzt er den Schalter 236 in den leitenden Zustand. Sofern ihm, während auf der Verbindung 233 kein Kriterium vorhanden ist, über die Verbindung 212 Impulse zugeführt werden, zählt er sie. Sofern die Impulszahl dem Kennzeichen der eigenen Station entspricht, verbringt er den Schalter 236 in den leitenden Zustand und gibt anschließend über die Verbindung 234 eine Zahl von Quittungsimpulsen ab, welche die empfangene Zahl auf die vorher genannte bestimmte Zahl ergänzt.

Der Teilnehmer S ist über die Drossel 221 gespeist. Das Ausgangssignal eines Rufstromerzeugers 222 wird über weitere Wicklungen dieser in diesem Falle als Transformator wirkenden Drossel in die Teilnehmerleitung eingekoppelt. Der Rufstromerzeuger wird über den Schalter 243 vom Zeitschalter 223 im Rufrhythmus in den Arbeitszustand versetzt.

Alle übrigen bis jetzt noch nicht erwähnten Schaltelemente sind entweder elektronische Schalter, ODER-Tore oder mit »T« bezeichnete Zeitstromkreise, welche beim Anlegen eines Eingangssignals zum Teil mit Verzögerung ein Ausgangssignal erzeugen und dieses Ausgangssignal, nachdem das Eingangssignal weggefallen ist, erst mit Verzögerung abschalten. Die Aufgabe dieser Schaltelemente wird später im Zusammenhang mit der Arbeitsweise der ganzen Anlage erklärt.

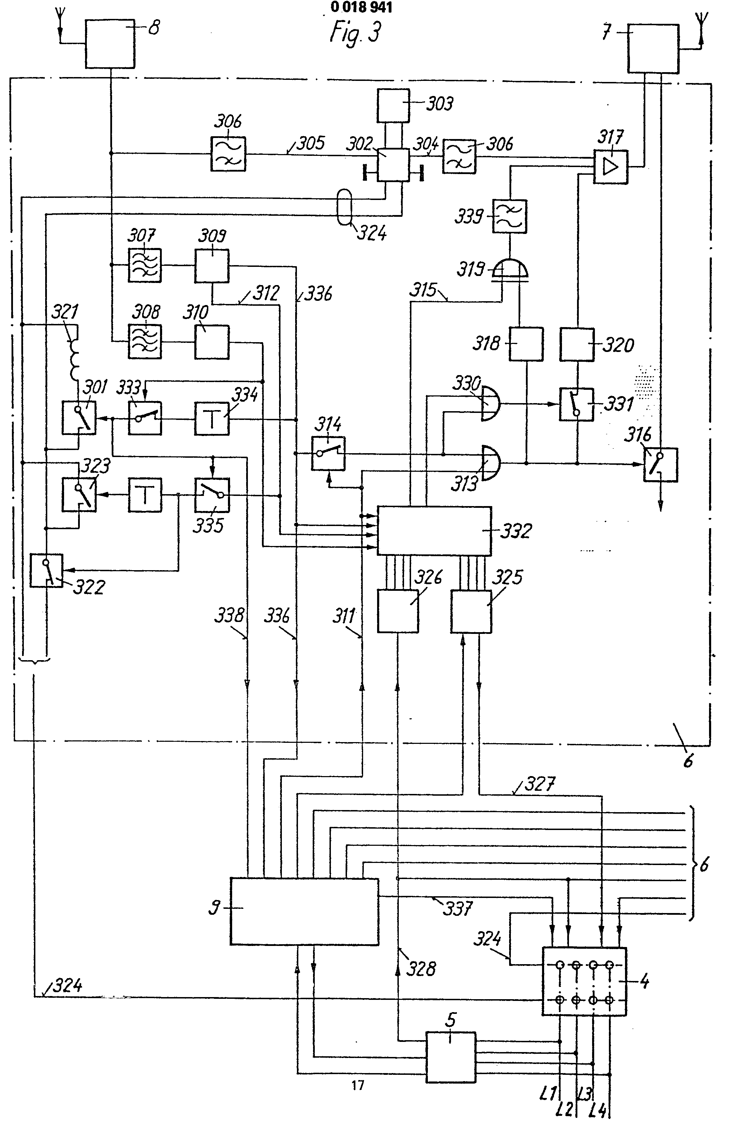

Das in der Fig. 1 mit 6 bezeichnete Kanal-Steuergerät ist im oberen Teil der Fig. 3 mit mehr Einzelheiten als in Fig. 1 dargestellt. Dieses Kanal-Steuergerät ist an den Sender 7 und den Empfänger 8 angeschlossen und enthält zum Teil gleiche Schaltelemente und Stromkreise mit den gleichen Schaltfunktionen wie das in Fig. 2 dargestellte Teilnehmer-Steuergerät. In der Folge werden diese Elemente aufgezählt und die entsprechende Bezeichnung in Fig. 2 in Klammern beigefügt. Es handelt sich dabei um die Gabel 302 (202) samt Nachbildung 303 (203) und senderseitiger bzw. empfängerseitiger Sprechleitung 304 (204) bzw. 305 (205), die Hochpaßfilter 306 (206), Bandfilter 307 (207) und Auswerter 309 (209) für die Signalfrequenz, Bandfilter 308 (208) und Auswerter 310 (210) für die Steuerfrequenz, den Einschalter 316 (216) für den Sender, den Summverstärker 317 (217), die Generatoren für Signalfrequenz 318 (218) und Steuerfrequenz 320 (220), das EXKLUSIV-ODER-Tor 319 (219) und das Tiefpaßfilter 339 (256).

Die von der Gabel 302 wegführende Zweidrahtleitung 324 kann über das Koppelfeld 4 mit einer der an die Zentrale führenden Leitungen L1 ... L4 verbunden werden. Ihre beiden Adern können durch den Kontakt 301 über die Drossel 321 miteinander verbunden und damit die Leitung belegt werden. Durch den Ruhekontakt 322 kann zwecks Abgabe von Wahlimpulsen an die Zentrale die Leitung 324 geöffnet und durch den Kontakt 323 kurzgeschlossen werden.

Die bereits früher erwähnte (nicht zum Kanal-Steuergerät gehörende) Anruf-Empfangsschaltung 5 gibt über die Verbindung 328 in kodierter Form Angaben über Leitungen, auf denen Anrufe eintreffen, an einen Dekodierer 326 ab, welcher sie in unverschlüsselter Form dem Wähl- und Prüfstromkreis 332 zur Verfügung stellt. In umgekehrter Richtung erhält ein Kodierer 325 vom Wähl- und Prüfstromkreis 332 Angaben über die Leitungen L1 ... L4, welche mit den Leitungen 324 zu verbinden sind und gibt diese Angaben über die Verbindung 327 in kodierter Form an das Koppelfeld 4 weiter.

Dem zentralenseitigen Wähl- und Prüfstromkreis 332 werden entsprechend dem bereits beschriebenen entsprechenden Stromkreis 232 Kriterien für den Empfang der Signalfrequenz (über Verbindung 336), für den Empfang von Impulsen (über Verbindung 312) und für einen von der Zentrale ankommenden Anruf (über Verbindung 311) zugeführt. Dieser Stromkreis steht mit dem vorher beschriebenen Kodierer 325 und Dekodierer 326 in Verbindung und gibt, wenn er über die Verbindung 311 ein Kriterium erhält, über die Verbindung 315 eine Anzahl von Impulsen ab, die den vom Dekodierer 326 gelieferten Angaben entsprechen. Anschließend zählt er die ihm über die Verbindung 312 zugeführten Quittungsimpulse und gibt, sofern die Summe der beiden Impulszahlen eine bestimmte, die Anzahl der vorhandenen Teilnehmer übersteigende Zahl ergibt, über das ODER-Tor 330 ein Kriterium ab und verbringt damit den Schalter 331 in den nichtleitenden Zustand. Treffen über die Verbindung 312 Impulse ein ohne daß über die Verbindung 311 ein Kriterium eintrifft, leitet er die der erhaltenen Impulszahl entsprechenden Angaben an den Kodierer 325 und gibt anschließend daran über die Verbindung 315 eine Zahl von Quittungsimpulsen ab, welche die empfangene Zahl auf die vorher genannte bestimmte Zahl ergänzt.

Das Haupt-Steuergerät 9 steht mit den beiden Wähl- und Prüfstromkreisen 332, den beiden Kodierern 325, der Anruf-Empfangsschaltung 5 und dem Koppelfeld 4 in Verbindung. Es koordiniert die den verschiedenen Kanälen zugeordneten Einrichtungen. Solange sich keine Verbindung in der Aufbauphase befindet, veranlaßt es die Anruf-Empfangsschaltung 5, die den Leitungen zugeordneten Stromkreise zwecks Feststellung eines Anrufs abzutasten. Beim Vorliegen eines solchen Anrufs teilt es der betreffenden Leitung einen freien Kanal zu und veranlaßt die Aussendung des Anrufs über diesen Kanal. In allen Fällen des Verbindungsaufbaus steuert es außerdem die einzelnen zu diesem Aufbau notwendigen Schritte, insbesondere die Durchschaltung des Koppelfeldes.

Die bis jetzt noch nicht erwähnten Schaltelemente sind entweder elektronische Schalter, ODER-Tore oder mit »T« bezeichnete Zeitstromkreise, welche die schon früher erwähnten Merkmale aufweisen. Die Aufgabe dieser Schaltelemente wird in der Folge im Zusammenhang mit der Arbeitsweise der gesamten Anlage beschrieben.

Die Fig. 4 zeigt den in den Fig. 2 und 3 mit 209 bzw. 309 bezeichneten Auswerter für die Signalfrequenz, und die Fig. 5 zeigt den zeitlichen Verlauf von verschiedenen in diesem Auswerter auftretenden Signalen. Die von einem nicht dargestellten Bandfilter ausgesiebte Signalfrequenz gelangt über den Eingang 413 an die beiden Phasendiskriminatoren 401 und 402. Der Phasendiskriminator 401 gehört einem Phasen-Regel-Kreis (phase locked loop) an, der außerdem einen über den Eingang 403 in seiner Frequenz gesteuerten Rechteckwellen-Erzeuger 404 und ein Tiefpaßfilter 405 umfaßt. Die Arbeitsweise eines solchen Phasen-Regel-Kreises wird als bekannt vorausgesetzt. Im Phasendiskriminator wird, wie aus dem Vergleich der Signale 413, 414 und 416 (Fig. 5) hervorgeht, am Ausgang 416 die Polarität des Signals gegenüber dem Eingang 413 umgekehrt, solange am Eingang 414 ein Signal vorhanden ist. Während der übrigen Zeit läuft das Signal 413 unverändert durch den Diskriminator 401. Infolgedessen wird, solange die bei 413 zugeführte Frequenz im Fangbereich des Erzeugers 404 liegt, dieser Erzeuger mit der zugeführten Frequenz phasenstarr synchronisiert, wobei zwischen den Signalen 413 und 414 eine mindestens angenähert 90° betragende Phasenverschiebung vorhanden ist.

Der Rechtecksignal-Erzeuger 404 weist außer dem Ausgang 414 noch die Ausgänge 415 und 417 auf. Wie in der Fig. 5 dargestellt ist, entspricht das Signal 415 dem Signal 414, ist jedoch um 90° dagegen verschoben. Das Signal am Ausgang 417 besteht aus einem jeweils kurz vor dem Ende jeder Halbperiode des Signals 414 auftretenden kurzen Impuls. Das letztgenannte Signal wird nun einem Schalter 406 zugeführt, welcher dem Signal 417 entsprechende Ausschnitte aus dem Signal 416 über einen Doppelweggleichrichter 407 an einen Speicherkondensator 408 anlegt, wobei die Zeitkonstante für die Entladung dieses Kondensators wesentlich größer ist als die Periode der Signalfrequenz. Es ist nun aus dem Vergleich der Signale 416 und 417 leicht einzusehen, daß unter der Voraussetzung der phasenstarren Synchronisierung des Erzeugers 404 mit dem Eingangssignal 413 vom Signal 416 immer die höchsten Spitzen herausgeschnitten und dem Gleichrichter 407 zugeführt werden, so daß dann am Kondensator 408 die mit 418 bezeichnete Spannung entsteht. Ist zwischen dem Signal 413 und dem Erzeuger 404 keine Synchronisierung vorhanden, kann die Spannung am Kondensator nur kleine Werte erreichen, da dann nicht nur hohe Werte des Signals 416 durch den Schalter 406 ausgeschnitten werden. Die Spannung 418, welche anschließend durch einen Schwellwert-Schalter 409 zu einem Digital-Signal umgewandelt wird, zeigt somit an, wenn dem Eingang 413 ein Signal zugeführt wird, dessen Frequenz dem Sollwert der Signalfrequenz entspricht.

Parallel zum Phasendiskriminator 401 wird das Eingangssignal 413 auch noch dem Phasendiskriminator 402 zugeführt, der in gleicher Weise arbeitet wie der Diskriminator 401, wegen des gegenüber dem Signal 414 phasenverschobenen Signals 415 jedoch ein anderes Ausgangssignal liefert. Im Ausgangssignal 419 ist die Phasenlage des Eingangssignals in bezug auf diejenige des Erzeugers 404 in der Form einer Gleichspannungskomponente vorhanden. Das Signal 419 wird in einem Tiefpaßfilter 410 von den Wechselspannungskomponenten befreit und über den Schalter 411 geführt, welcher es erst dann an den Schwellwert-Schalter 412 leitet, wenn der Empfang eines Signals der Sollfrequenz einwandfrei festgestellt ist.

Dem Schwellwertschalter 412 wird somit das Signal 420 zugeführt, wobei dieser Schalter nur auf die negative Komponente des Signals 420 anspricht und somit dieses Signal in ein (nicht dargestelltes) digitales Signal umwandelt, welches der Phasendrehung des Eingangssignals gegenüber seiner Normal-Phasenlage entspricht und somit die der Signalfrequenz aufmodulierten Impulse wiedergibt.

Die zuletzt beschriebene Anordnung soll die Verhältnisse bei der Demodulation eines phasenmodulierten Signals nur grundsätzlich zeigen, denn deren richtige Arbeitsweise hängt von der Voraussetzung ab, daß das Tiefpaßfilter 405 eine Grenzfrequenz aufweist, die wesentlich kleiner ist als die Frequenz der übertragenen Impulse, was jedoch zu einer für die Praxis untragbaren Einstellzeit der Synchronisierung führt. Mit wesentlich komplizierteren Einrichtungen, die aber mit der vorliegenden Erfindung keine Beziehung haben und deren Beschreibung zu weit führen würde, könnten diese Nachteile behoben werden.

Vorerst werden nun die Vorgänge beschrieben, wenn beispielsweise der Teilnehmer S2 von der Zentrale aus angerufen wird. Die Kennung dieses Teilnehmers wird durch eine Serie von zwei Impulsen gebildet, und die genannte bestimmte Zahl von Impulsen, auf welche die Kennungsimpulse durch die Quittungsimpulse ergänzt werden, wird mit fünf angenommen. Wie zuletzt im Zusammenhang mit dem Haupt-Steuergerät beschrieben wurde, sucht die Anruf-Empfangsschaltung 5, solange kein Anruf vorliegt, die den Leitungen zugeordneten Anrufstromkreise fortwährend ab, unterbricht bei einem eintreffenden Anruf den Abtastvorgang und meldet diesen Umstand an das Haupt-Steuergerät 9. Das Steuergerät 9, welches über die Verbindungen 336 die noch freien Kanäle feststellt, erteilt über die betreffende Verbindung 311 und das Tor 313 Befehle zum Einschalten des Senders des betreffenden Kanals und der zugehörigen Generatoren 318 und 320 für Signal- und Steuerfrequenz. Über die Verbindung 337 erhält das Koppelfeld 4 den Befehl, die über die Verbindung 328 bekanntgegebene Leitung mit dem durch das Haupt-Steuergerät 9 bestimmten Kanal zu verbinden. Der über die Verbindung 311 betätigte Schalter 314 verhindert eine Beeinflussung des Senders durch empfangene Signale und überläßt somit die Steuerung des Senders und der Signal- und Steuerfrequenzen ausschließlich dem Haupt-Steuergerät 9.

Wie bereits erwähnt wurde, werden in den in Fig. 2 dargestellten teilnehmerseitigen Einrichtungen, solange sie nicht durch ein Gespräch belegt sind, periodisch die Kanäle nach einem solchen abgesucht, auf welchem eine Steuerfrequenz aufmoduliert ist. Sobald nun ein solcher Kanal gefunden ist, wird die Kanalwahl-Einrichtung 226 über die Verbindung 235 und das ODER-Tor 227 stillgesetzt und der Empfänger 3 veranlaßt, auf dem betreffenden Kanal dauernd zu empfangen. Dieser Zustand ist nun in sämtlichen teilnehmerseitigen Einrichtungen vorhanden, welche nicht durch ein Gespräch belegt sind.

Die zusammen mit der Steuerfrequenz empfangene Signalfrequenz bewirkt über die Verbindung 211 und den Schalter 255 die Betätigung des Schalters 247, wodurch eine Beeinflussung der Verbindung 233 durch den Gabelkontakt der Teilnehmerstation während der ganzen Dauer des Vorhandenseins der Signalfrequenz verhindert ist. Im Kanal-Steuergerät 6 erhält der Wähl- und Prüfstromkreis 332 über die Verbindung 311 den Befehl, nach Ablauf einer Verzögerungszeit, welche die Anschaltung aller freien teilnehmerseitigen Empfänger erlaubt, über die Verbindung 315 an das Tor 319 Impulse abzugeben, deren Anzahl, im vorliegenden Beispiel zwei, der über die Verbindung 328 übermittelten Kennzeichnung der Leitung entspricht, über welche der Anruf eingetroffen ist. Die in beschriebener Weise nach den Teilnehmer-Steuergeräten übermittelten Impulse gelangen dort je vom Auswerter 209 über die Verbindung 212 an den Wähl- und Prüfstromkreis 232, wo sie ausgewertet werden. Der Stromkreis 232 desjenigen Steuergerätes, welches aufgrund der Impulszahl feststellt, daß der Anruf für den betreffenden Teilnehmer bestimmt ist, legt mit Hilfe des Schalters 236 das vom Auswerter 209 über die Verbindung 211 abgegebene Signal an die Verbindung 237 und über Schalter 238, ODER-Tor 239 und Schalter 240 an die Verbindung 241. Über diese Verbindung 241 wird der Generator 218 für die Signalfrequenz (über den Schalter 216), der Sender 2 und (über den Schalter 251) der Generator 220 für die Steuerfrequenz eingeschaltet, während (über das ODER-Tor 242) der Empfänger im eingeschalteten und (über das ODER-Tor 227) die Kanalwahl-Einrichtung 226 im stillgesetzten Zustand gehalten wird. Der Wähl- und Prüfstromkreis 232 gibt nun außerdem über die Verbindung 234 drei Quittungsimpulse ab, welche die empfangenen zwei Impulse auf die im vorliegenden Beispiel angenommene bestimmte Zahl fünf ergänzen. Im Kanal-Steuergerät wird infolge der Wirkung des eine Ansprechverzögerung bewirkenden Zeitkreises 334 der Schalter 333 durch den Empfang der Steuerfrequenz betätigt bevor eine Beeinflussung des Schalters 301 durch den Empfang der Signalfrequenz möglich ist. Die genannten Impulse werden in bekannter Weise über die Verbindung 312 dem Wähl- und Steuerstromkreis 332 zugeführt. Stellt dieser letztgenannte Stromkreis die richtige Zahl von Impulsen fest, betätigt er über das ODER-Tor 330 den Schalter 331, wodurch der Generator 320 für die Steuerfrequenz ausgeschaltet wird.

Der somit sich ergebende Abbruch der Steuerfrequenz bewirkt im Teilnehmer-Steuergerät die Rückkehr der beiden Schalter 213 und 214 in die Ruhelage. Der Schalter 214 schließt den Sprechstromkreis zwischen Empfänger und Teilnehmerstation, während der Schalter 213 das an der Verbindung 237 liegende Signal dem Zeitschalter 223 zuführt, welcher seinerseits über den Schalter 243 den Rufstromerzeuger 222 periodisch zur Aussendung von Rufstrom nach der Teilnehmerstation veranlaßt. In den nicht angerufenen Teilnehmer-Steuergeräten kehrt infolge der Abschaltung der Steuerfrequenz im Kanal-Steuergerät die Kanalwahl-Einrichtung in den Bereitschafts-Zustand zurück und sucht die Kanäle wiederum nach eintreffenden Anrufen ab.

Sofern der Anruf von der Zentrale aufhört, bevor er beantwortet wurde, wird das Aufhören von der Anruf-Empfangsschaltung 5 festgestellt und an das Haupt-Steuergerät 9 gemeldet, welches daraus auf einen unbeantworteten Anruf schließt, das Anschaltekriterium auf der Verbindung 311 aufhebt und somit den zentralenseitigen Sender abschaltet. Im Teilnehmergerät bewirkt der Unterbruch des Empfangs der Signalfrequenz die Überführung der Verbindungen 211, 237 und 241 in den Ruhezustand, worauf auch dieses Steuergerät samt Sender und Empfänger in die Ruhelage zurückkehrt.

Beantwortet dagegen der angerufene Teilnehmer den Anruf, wird über die Verbindung 244 einerseits unter Zwischenschaltung des Zeitkreises 245 mit dem Schalter 243 die Zufuhr von Rufstrom zum Teilnehmer unterbrochen, und anderseits über den Schalter 252 und das Tor 230 der Schalter 251 betätigt und damit die über den Sender ausgesendete Steuerfrequenz abgebrochen. Die Verbindung 241, über welche Sender und Signalfrequenz eingeschaltet sind, und welche bis jetzt von der empfangenen Signalfrequenz über die Verbindungen 211 und 237 und den Schalter 238 im aktiven Zustand gehalten wurde, wird nun von der Verbindung 244 aus über den Zeitkreis 246 in diesem Zustand gehalten, während über das Tor 253 der Schalter 254 und damit der Schalter 238 betätigt wird. Der Schalter 254 hält sich somit während der ganzen Dauer des Empfangs einer Signalfrequenz im leitenden Zustand und verhindert durch Sperrung des Schalters 238 die Steuerung des Senders und der ausgesendeten Signalfrequenz durch die empfangene Signalfrequenz, welche Steuerung nun ausschließlich vom Gabelkontakt der Teilnehmerstation übernommen ist.

Der vorher erwähnte Abbruch der Steuerfrequenz durch die Beantwortung des Anrufs hat im Kanal-Steuergerät zur Folge, daß der Schalter 333 in seinen leitenden Zustand zurückkehrt und damit über den Schalter 301 einen Schleifenschluß auf der Leitung 324 erzeugt. Das Gespräch ist somit durchgeschaltet, und in den beiden Richtungen ist auf den Funkkanälen außer dem Gespräch nur die Signalfrequenz vorhanden.

Die Beantwortung des Anrufs wird über die Verbindung 338 auch dem Haupt-Steuergerät 9 übermittelt, welches auf nicht dargestellte Weise das über die Verbindung 311 abgegebene, Sender und Signalfrequenz im eingeschalteten Zustand erhaltende Kriterium nicht mehr vom Vorliegen eines Anrufs, sondern vom Empfang der Signalfrequenz (Verbindung 336) abhängig macht. Bei der Beendigung der Verbindung infolge Betätigung des Gabelkontaktes durch den Teilnehmer kehren teilnehmerseitig der Sender und der Generator für die Signalfrequenz in die Ruhelage zurück, während der Empfänger wiederum in den Bereitschaftszustand mit periodischer Kanalabtastung übergeht. Infolge des Wegfalls einer empfangenen Signalfrequenz veranlaßt zentralenseitig das Hauptsteuergerät die Rückkehr aller dem betreffenden Kanal und der betreffenden Leitung zugeordneten Organe in den Ruhe- bzw. Bereitschaftszustand.

In der Folge werden die Vorgänge beschrieben, welche sich abspielen, wenn ein Teilnehmer eine Verbindung aufbaut. Dabei wird angenommen, daß es sich um den dritten Teilnehmer handelt, dessen Kennung aus drei Impulsen besteht. Sobald der Gabelkontakt der Station betätigt wird, wird über die Verbindung 244 und den Schalter 247 die Verbindung 233 in den aktiven Zustand versetzt, was ein Kriterium für einen von der Teilnehmerstation ausgehenden Anruf darstellt. Dieser aktive Zustand bewirkt die Betätigung der Schalter 255, 252, 248 und (über den Schalter 250) 240. Die Betätigung des Schalters 255 verhindert dabei die Beeinflussung des Schalters 247, der Schalter 240 verhindert vorläufig die Einschaltung des Senders und die beiden Schalter 248 und 252 bewirken eine Änderung der An- und Abschaltung der abgehenden Steuerfrequenz. Der Zeitkreis 246 ermöglicht dabei mit Sicherheit, daß der Schalter 240 gesperrt wird, bevor eine Betätigung des Schalters 250 über die Verbindung 241 erfolgen kann. Der aktive Zustand der Verbindung 233 bewirkt außerdem über das Tor 242 die dauernde Einschaltung des Empfängers und das Versetzen der Suchumschaltung 231 in den aktiven Zustand. Die Suchumschaltung 231 veranlaßt nun, daß die Kanalwahl-Einrichtung 226 vom Suchstromkreis 228 gesteuert wird, demzufolge die periodische Suche nach einem einen Anruf übermittelnden Kanal einstellt und statt dessen einen freien Kanal sucht, indem sie in rascher Folge die verschiedenen Kanäle des Empfängers einschaltet. Der freie Zustand eines angeschalteten Kanals wird festgestellt, wenn über die Verbindung 225 keine Trägeranzeige eintrifft. Dann wird die Kanalwahl-Einrichtung auf dem betreffenden Kanal angehalten und es werden die später erklärten Vorgänge eingeleitet.

Wird auf diese Weise kein freier Kanal gefunden, könnte es sein, daß trotzdem ein freier Kanal vorhanden ist, auf dem sich jedoch ein Störträger befindet. Um auch in diesem Falle einen freien Kanal zu finden, wird, sofern die erste Suche erfolglos verlief, über die Verbindung 249 die Suchumschaltung 231 veranlaßt, mit Hilfe des Suchstromkreises 229 einen Kanal zu suchen, auf welchem keine Signalfrequenz vorhanden ist. Diese Suche läuft, wie früher ausgeführt wurde, langsamer ab als die erste. Sofern ein Kanal ohne Signalfrequenz gefunden ist, wird dies über die Verbindung 211 festgestellt, die Kanalwahl-Einrichtung 226 wird sodann stillgesetzt und über das Tor 258 der Schalter 250 betätigt. Dies bewirkt, daß der Schalter 240 in den leitenden Zustand übergeht, wodurch über die Verbindung 241 der Sender und die Generatoren 218 und 220 eingeschaltet werden. Der Sender sendet somit den mit Signal- und Steuerfrequenz modulierten Träger aus und belegt damit das Kanal-Steuergerät des betreffenden Kanals.

In diesem Kanal-Steuergerät bewirkt der Empfang der Signalfrequenz über die Verbindung 336, den Schalter 314 und das Tor 313 die Inbetriebsetzung des Senders und seine Modulation mit der Signalfrequenz, während mit dem über das Tor 330 betätigten Schalter 331 die Aussendung der Steuerfrequenz verhindert ist. Der Kanal ist somit belegt. Im Teilnehmer-Steuergerät des anrufenden Teilnehmers veranlaßt die ankommende Signalfrequenz über die Verbindung 211 zusammen mit dem aktiven Zustand der Verbindung 233 den Wähl- und Prüfstromkreis 232 zur Abgabe von drei Impulsen, welche in früher beschriebener Weise an den Eingang 312 des Wähl- und Prüfstromkreises 332 des betreffenden Kanals gelangen. Dort veranlassen sie einerseits mit Hilfe des Kodierers 325 und des Haupt-Steuergerätes 9, daß im Koppelfeld 4 die dem anrufenden Teilnehmer entsprechende, nach der Zentrale führende Leitung mit der dem belegten Kanal entsprechenden Leitung 324 verbunden wird, und anderseits bewirken sie über die Verbindung 315 die Aussendung von zwei Quittungsimpulsen, welche die drei der Kennung entsprechenden Impulse auf die genannte Zahl fünf ergänzen, nach dem Teilnehmer-Steuergerät. Sofern die empfangene Impulszahl richtig ist, betätigt der teilnehmerseitige Wähl- und Prüfstromkreis 232 den Schalter 236 und unterbricht damit über den leitenden Schalter 248 und das Tor 230 den Schalter 251, wodurch die Steuerfrequenz unterbrochen wird. Dieser Unterbruch bewirkt im Kanal-Steuergerät in bereits beschriebener Weise den Schleifenschluß der über das Koppelfeld 4 angeschalteten Teilnehmerleitung und durch die Betätigung des Schalters 335 die Vorbereitung der Wahlabgabe. Der Teilnehmer erhält nun von der Zentrale das Wählzeichen und gibt Unterbrechungsimpulse ab, welche über die Verbindung 244 und das Tor 257 dem Tor 219 in gleicher Weise zugeführt werden wie die vom Wähl- und Prüfstromkreis über die Verbindung 234 zugeführten. Im Kanal-Steuergerät werden die Impulse über die Verbindung 312 und den Schalter 335 dem Schalter 322 und über eine Zeitverzögerung dem Schalter 323 zugeführt. Der Schalter 322 erzeugt Unterbrechungs-Wählimpulse und der Schalter 323 schließt jeweils während einer Impulsserie die Leitung kurz.

Nach Beendigung der Wahl kann ein Gespräch geführt werden. Die Sender und Empfänger der teilnehmerseitigen Einrichtungen werden dabei vom Gabelkontakt der Teilnehmerstation aus im eingeschalteten Zustande erhalten, während die zentralenseitigen Einrichtungen von der von den teilnehmerseitigen Einrichtungen abgegebenen Signalfrequenz im Sprechzustand erhalten werden. Demgemäß erfolgt auch die Aufhebung der Verbindung vom Teilnehmer aus.

Aus den vorherigen Ausführungen geht somit hervor, daß die vom Kanal-Steuergerät erzeugte Steuerfrequenz die freien Teilnehmer-Einrichtungen zum Aufschalten auf den betreffenden Kanal veranlaßt und daß deren Abbruch den Anruf der gewählten Teilnehmerstation bewirkt, während die vom Teilnehmer-Steuergerät erzeugte Steuerfrequenz jeweils bei deren Abbruch das Schließen der Schleife der angeschalteten, nach der Zentrale führenden Leitung bewirkt.

Die Erfindung ist natürlich nicht auf das Ausführungsbeispiel beschränkt. Bei einer großen Zahl von Teilnehmern ist es möglich, die Zahl der für die Kennzeichnung der Teilnehmer und für die Quittierung zu übermittelnden Impulse zu beschränken, indem die Teilnehmer in Gruppen eingeteilt werden und jeder Gruppe eine verschiedene Steuerfrequenz zugeordnet wird. Jede eine Teilnehmerstation bzw. eine Anschlußleitung kennzeichnende Zahl von Impulsen kann damit in jeder Gruppe für eine andere Station bzw. Leitung verwendet werden. Die Wähl- und Prüfstromkreise werden infolgedessen vereinfacht und die Durchschaltzeiten werden verkürzt, dafür ist jedoch in den Kanal-Steuergeräten für jede der verschiedenen Steuerfrequenzen ein Bandpaß-Filter und ein Steuerfrequenz-Auswerter anzuordnen, und der Steuerfrequenz-Generator muß auf verschiedene Frequenzen umschaltbar sein.

Es ist auch möglich, von den Kanal-Steuergeräten aus Gebührenmeldeimpulse in gleicher Weise wie die Impulse zur Kennzeichnung der anzurufenden Teilnehmer zu übertragen, sofern mit dem Kriterium für das Schließen der Schleife sowohl im Kanal- als auch im Teilnehmersteuergerät die notwendigen Umschaltungen gesteuert werden.

Ebenso wäre es möglich, auf der Teilnehmerseite die Zahl der Sender und Empfänger auf die Zahl der Kanäle zu beschränken, ihnen je einen Kanal fest zuzuteilen und auch dort ein Koppelfeld anzuordnen, mit welchem die Kanäle mit den Teilnehmern verbunden werden könnten. Die Schaltvorgänge an den teilnehmerseitigen Einrichtungen wären in diesem Falle von den beschriebenen zwar wesentlich verschieden, und die Suche nach einem freien Kanal müßte nicht mehr durch Frequenzumschaltung der Sender und Empfänger erfolgen, aber die Grundsätze zur gegenseitigen Übermittlung von Signalen, die Zeitpunkte der Übermittlung der Signalfrequenz und der Steuerfrequenz im Rahmen des Verbindungsaufbaus und die Wirkungen der Steuerfrequenz blieben gleich wie im Ausführungsbeispiel.

**Patentansprüche**

1. Anlage zur drahtlosen Übertragung von Telefongesprächen, mit mehreren je eine Kennung aufweisenden Teilnehmerstationen (S1 ... S4), mit je einer jeder der Teilnehmerstationen zugeordneten, an eine Telefonzentrale führenden, eine Kennung aufweisenden Anschlußleitung (L1 ... L4), mit einer die Anzahl der Teilnehmerstationen unterschreitenden Anzahl von abwechslungsweise durch die verschiedenen Teilnehmerstationen benützten Funkkanälen (K1, K2), mit je einem jeder Teilnehmerstation zugeordneten (teilnehmerseitigen), auf die verschiedenen Kanäle umschaltbaren Sender-Empfänger (2, 3), mit je einem jedem Kanal zugeordneten und mit den verschiedenen Anschlußleitungen (L1 ... L4) verbindbaren (zentralenseitigen) Sender-Empfänger (7, 8), mit Schaltungsmitteln, um die Kennung einer Anschlußleitung, auf welcher ein Anruf eintrifft, die Kennung einer Teilnehmerstation, von welcher aus ein Verbindungsaufbau beabsichtigt ist und die von der Teilnehmerstation abgegebenen Wahlimpulse mit Hilfe von außerhalb des Sprachfrequenzbandes liegenden Signalfrequenzen zu übertragen, ferner mit zentralenseitigen Schaltungsmitteln (320), um einen Kanal, über welchen ein an eine Teilnehmerstation gerichteter Anruf ausgesendet werden soll, zu kennzeichnen und mit den einzelnen Teilnehmern zugeordneten Schaltungsmitteln (226), welche im Ruhezustand der betreffenden Teilnehmerstation den zugehörigen Empfänger (3) zyklisch auf den Empfang der verschiedenen Kanäle umschalten und beim Empfang eines gekennzeichneten Kanals die Umschaltung abbrechen, dadurch gekennzeichnet, daß als Signalfrequenz eine unterhalb des Sprachbandes liegende Frequenz (218, 309, 318, 209) verwendet ist, daß sowohl die Kennungen als auch die Wahlimpulse mit Hilfe von digitale Phasensprünge von 180° aufweisender Phasenmodulation der Signalfrequenz übertragen werden (Fig. 5) und daß die genannte Kennzeichnung eines Anrufs mit einer einzigen, dem betreffenden Kanal aufmodulierten, im Sprachband liegenden und mehreren Teilnehmerstationen gemeinsam zugeordneten Steuerfrequenz (320, 210) erfolgt.

2. Anlage nach dem Patentanspruch 1, dadurch gekennzeichnet, daß die Teilnehmer in Gruppen eingeteilt sind, daß jeder Gruppe eine verschiedene Steuerfrequenz zugeteilt ist und daß die genannten, den einzelnen Teilnehmern zugeordneten Schaltungsmittel (210) ausschließlich auf diejenige Steuerfrequenz ansprechen, welche der Gruppenzugehörigkeit des betreffenden Teilnehmers entspricht.

3. Anlage nach dem Patentanspruch 1, gekennzeichnet durch je den teilnehmerseitigen Sendern zugeordnete Schaltungsmittel (220), welche während der Vorbereitung zu einem vom zugehörigen Teilnehmer ausgehenden Verbindungsaufbau eine im Sprachfrequenzbereich liegende Steuerfrequenz dem Kanal aufmodulieren und gekennzeichnet durch den zentralenseitigen Empfängern zugeordnete Schaltungsmittel (310), welche die genannte Steuerfrequenz auswerten, während ihres Ansprechens die von den teilnehmerseitigen Schaltungsmitteln übermittelten Impulse einer Auswerteschaltung (332) für die Kennung zuführen und welche, sofern gleichzeitig eine von teilnehmerseitigen Schaltungsmitteln (218) abgegebene Signalfrequenz auf dem betreffenden Kanal empfangen wird, anläßlich der Rückkehr in ihren Ruhezustand einen Schleifenschluß (333, 301) der betreffenden Leitung einleiten und die genannten Impulse weitern, der Übertragung der Wahl dienenden, die betreffende Leitung beeinflussenden Schaltungsmitteln (335, 322) zuführen.

4. Anlage nach dem Patentanspruch 1, dadurch gekennzeichnet, daß die den zentralenseitigen Sendern (7) zugeordneten, die Steuerfrequenz aussendenden Schaltungsmittel (320) diese Steuerfrequenz ausschließlich während der Vorbereitung zu einem Anruf aussenden und daß je den teilnehmerseitigen Empfängern (3) zugeordnete, die Steuerfrequenz auswertende Schaltungsmittel (210) vorhanden sind, von denen die der rufenden Teilnehmerstation zugeordneten, sofern gleichzeitig eine von zentralenseitigen Schaltungsmitteln (318) abgegebene Signalfrequenz auf dem betreffenden Kanal empfangen wird, anläßlich der Rückkehr in ihren Ruhezustand die Anlegung eines Rufsignals (213, 222) an die betreffende Teilnehmerstation einleiten.

## Claims

1. Installation for the wireless transmission of telephone conversations, with several subscriber's sets (S1 ... S4), each having an identification signal, with a subscriber's line (L1 ... L4) respectively associated with each of the subscriber's sets, leading to a telephone exchange, and having an identification signal, with a number, less than the number of subscriber's sets, of radio channels (K1, K2) used alternately by the different subscriber's sets, with a transmitter (2) and a receiver (3), both respectively associated (at the subscriber's end) with each of the subscriber's sets, switchable to the different channels, with a transmitter (7) and a receiver (8) (at the exchange end), both respectively associated with each channel and connectable to the different subscriber's lines (L1 ... L4), with circuit means for transmitting the identification signal of a subscriber's line on which a call comes in, the identification signal of a subscriber's set from which it is intended to establish a communication, and the dialling pulses transmitted by the subscriber's set with the aid of signal frequencies outside the speech band, further with circuit means (320) at the exchange end for identifying a channel over which a call directed to a subscriber's set is supposed to be transmitted, and with circuit means (226) associated with the individual subscribers, which circuit means (226), in the rest state of the respective subscriber's set, switch the associated receiver (3) cyclically over to reception of the different channels and interrupt the switching-over upon reception of an identified channel, characterized in that a frequency (218, 309, 318, 209) below the speech band is used as the signal frequency, that both the identification signals and the dialling pulses are transmitted with the aid of phase-modulation of the signal frequency, exhibiting digital phase reversals (fig. 5), and that the said identification of a call takes place by means of a single control frequency (320, 210) modulated upon the respective channel, situated in the speech band, and associated with several subscriber's sets in common.

2. Installation according to claim 1, characterized in that the subscribers are divided into groups, that each group is assigned a different control frequency, and that the said circuit means (210) associated with the individual subscribers respond solely to that control frequency which corresponds to the group to which the respective subscriber belongs.

3. Installation according to claim 1, characterized by circuit means (220) associated with each of the subscriber-end transmitters, which circuit means, during the preparations for the establishment of a connection emanating from the associated subscriber, modulate a control frequency in the speech-frequency range upon the channel, and characterized by circuit means (310) associated with the exchange-end receivers, which circuit means evaluate the said control frequency, supply during their response the pulses transmitted by the subscriber-end circuit means to an evaluation circuit (332) for the identification signal, and which, insofar as a signal frequency transmitted by subscriber-end circuit means is simultaneously received on the respective channel, initiate upon return to their rest state a loop connection (333, 301) of the respective line and supply said pulses to further circuit means (335, 322) serving to transmit the dialling and influencing the respective line.

4. Installation according to claim 1, characterized in that the circuit means (320) associated with the exchange-end transmitters (7) and transmitting the control frequency transmit this control frequency solely during the preparations for a call, and that there are circuit means (210) associated with each of the subscriber-end receivers (3) and evaluating the control frequency, of which circuit means those associated with the calling subscriber's set, insofar as a signal frequency transmitted by exchange-end circuit means (318) is simultaneously received on the respective channel, initiate upon return to their rest state the application of a call signal (213, 222) to the respective subscriber's set.

## Revendications

1. Installation pour la transmission sans fil de conversations téléphoniques, comprenant plusieurs stations d'abonné (S1 ... S4) ayant chacune un signal d'identification, plusieurs lignes d'abonné (L1 ... L4) respectivement associées avec chacune des stations d'abonné, menant à un central téléphonique et ayant un signal d'identification, des canaux radio (K1, K2), en un nombre inférieur à celui des stations d'abonné, utilisés alternativement par les différentes stations d'abonné, des émetteurs-récepteurs (2, 3) chacun associé (côté abonné) respectivement à une station d'abonné et commutables sur les différents canaux, des émetteurs-récepteurs (7, 8) chacun associé (côté central) respectivement avec un canal et connectables aux différentes lignes d'abonné (L1 ... L4), des moyens à circuit pour transmettre le signal d'identification d'une ligne d'abonné sur laquelle parvient un appel, le signal d'identification d'une station d'abonné de laquelle on a en vue l'établissement d'une liaison, et les impulsions de sélection délivrées par la station d'abonné à l'aide d'une fréquence de signal située à l'extérieur de la bande de fréquence de parole, d'autres moyens à circuites (320), du côté central, pour l'identification du canal sur lequel doit être envoyé un appel adressé à une station d'abonné, et des moyens à circuits (226) associés individuellement aux abonnés, qui, à l'état de repos de la station d'abonné correspondante, commutent cycliquement le récepteur (3) correspondant sur la réception des différents canaux, et qui, sur réception d'un canal désigné, interrompent cette commutation cyclique, caractérisée en ce qu'une fréquence (218, 309, 318, 209) située en dessous de la bande de parole, est utilisée comme fréquence de signal, en ce qu'aussi bien les signaux d'identification que les impulsions de sélection sont transmis à l'aide d'une modulation de phase de la fréquence de signal présentant des sauts de phase digitaux de 180° (fig. 5), et en ce que la dite identification d'un appel intervient par une seule fréquence de commande (320, 210) modulée sur le canal correspondant, située dans la bande de parole, et dévolue communément à plusieurs stations d'abonnés.

2. Installation selon la revendication 1, caractérisée en ce que les abonnés sont répartis en groupes, une fréquence de commande étant dévolue à chaque groupe, les dits moyens à circuits (210) associés individuellement aux abonnés répondant uniquement à celle des fréquences de commande qui correspond au groupe dont fait partie l'abonné associé.

3. Installation selon la revendication 1, caractérisée par des moyens à circuits (220) associés avec chacun des émetteurs côté abonnés, et qui, pendant la préparation de l'établissement d'une connexion émanant de l'abonné associé, modulent dans le canal une fréquence de commande dans le domaine de fréquences de parole, et caractérisée par des moyens à circuits (310) associés aux récepteurs du côté central, qui évaluent la dite fréquence de commande, qui, pendant leur fonctionnement, délivrent à un circuit d'évaluation (332) les impulsions transmises par les moyens à circuits du côté abonnés, pour les identifier, et qui, pour autant que simultanément une fréquence de signal délivrée par des moyens à circuits (218) du côté abonnés soit reçue sur le canal correspondant, engagent, lors de leur retour à l'état de repos, une connexion en boucle (333, 301) de la ligne correspondante, et délivrent les dites impulsions servant à la transmission de la sélection à d'autres moyens à circuits (335, 322) qui influencent la ligne correspondante.

4. Installation selon la revendication 1, caractérisée en ce que les moyens à circuits (320) associés aux émetteurs (7) du côté central et transmettant la fréquence de commande, émettent cette fréquence de commande uniquement durant la préparation d'un appel, et en ce que des moyens à circuits (210), associés avec chacun des récepteurs (3) du côté abonnés, sont présents, qui évaluent la fréquence de commande, et dont ceux qui sont associés à la station d'abonné appelante engagent, pour autant qu'une fréquence de signal délivrée par les moyens à circuits (210) du côté central soit simultanément reçue sur le canal correspondant, l'application d'un signal d'appel (213, 222) à la station d'abonné correspondante, lors de leur retour à l'état de repos.

Fig. 1

0 018 941

0 018 941

Fig. 2

15

0 018 941

Fig. 3

0 018 941

Fig. 4

Fig. 5

19